# EUROPÄISCHE PATENTSCHRIFT

(11) **EP 0 972 687 B1**
(45) Veröffentlichungstag und Bekanntmachung des Hinweises auf die Patenterteilung: **13.09.2006**
(21) Anmeldenummer: 99113923.9
(22) Anmeldetag: 16.07.1999
(51) Int. Cl.: B60S 9/08

(54) **Schwenkfuss zur Bodenabstützung für eine Hubeinrichtung**
Swivel foot for the ground support of a lifting device
Pied pivotant pour le support au sol d'un dispositif de levage

(30) Priorität: 17.07.1998 DE 19832260
(43) Veröffentlichungstag der Anmeldung: 19.01.2000
(73) Patentinhaber: haacon hebetechnik gmbh, D-97896 Freudenberg (DE)
(72) Erfinder: Miltenberger, Robert, 63928 Eichenbühl (DE); Rosbach, Benno, 97903 Collenberg (DE); Schmitt, Wilfried, 97909 Stadtprozelten (DE); Trunk, Gerhard, 97903 Collenberg (DE)
(74) Vertreter: Böck, Bernhard

(56) Entgegenhaltungen:
- DE-C- 4 024 825
- GB-A- 2 187 423
- US-A- 3 920 094
- US-A- 5 137 301

## Beschreibung

Die vorliegende Erfindung betrifft einen Schwenkfuß zur Abstützung einer Stütz- oder Hubeinrichtung, insbesondere eine Sattelstütze oder dergleichen, mit einem Stützrohr zur verschwenkbaren Abstützung auf einer Schwenkachse des Schwenkfußes, wobei der Schwenkfuß eine Schwenkeinheit mit zumindest einer Schwenkwange aufweist, die bei einer Verlagerung der Schwenkachse mit einem Abrollsteg eine Abrollbewegung ausführt.

Schwenkfüße der eingangs genannten Art ermöglichen aufgrund ihrer um eine Schwenkachse verschwenkbaren Ausführung eine Abstützung von Gegenständen, wie beispielsweise Containern oder Sattelaufliegern, auch auf unebenem oder schrägem Untergrund. Aufgrund der rauhen Einsatzbedingungen und der häufig sehr hohen Lasten, die über eine beispielsweise mit dem Schwenkfuß verbundene Abstütz- oder Hubeinrichtung in den Untergrund eingeleitet werden, sind die bekannten Schwenkfüße sehr massiv ausgeführt und bestehen in der Regel aus einer Schweißkonstruktion, bei der eine Schwenkwange über eine Schweißverbindung mit einem als Reifsegment ausgebildeten Abrollsteg verbunden ist.

Verbunden mit der Ausführung als massive Schweißkonstruktion ist natürlich ein entsprechend hohes Gewicht der bekannten Schwenkfüße, das sich bei der in aller Regel manuell durchgeführten Handhabung der Schwenkfüße - insbesondere in dem Fall, wenn die Schwenkfüße mit einer Abstütz- oder Hubeinrichtung verbunden sind - zur Positionierung der Schwenkfüße am vorgesehenen Ort durch eine Bedienungsperson als nachteilig erweist. Darüber hinaus werden derartige Schwenkfüße - insbe-sondere in fester Verbindung mit Abstütz- oder Hubeinrichtungen - an einem Fahrzeug häufig mitgeführt, um die Schwenkfüße stets unmittelbar verfügbar zu halten. Somit tragen die Schwenkfüße auch zu einer Erhöhung des Gesamtgewichts des Fahrzeugs bei.

Aus der US-A-5 137 301 geht ein Schwenkfuß hervor, der einen Zylindermantelabschnitt als Abrollfläche verwendet. Diese Zylindermantelabschnittsfläche verbindet dabei die beiden Schwenkwangen des Schwenkfußes und weist einen Umfangsabschnittsschlitz auf, durch den die Rückholfedern des Schwenkfußes, der den Schwenkfuß bei Entlastung in eine definierte rechtwinklige Stellung bezüglich des Schaftrohrs der Sattelstütze positioniert, geführt sind.

Der vorliegenden Erfindung liegt daher die Aufgabe zugrunde, einen Schwenkfuß vorzuschlagen, der sich durch ein möglichst geringes Eigengewicht auszeichnet, ohne nachteilige Auswirkungen auf die Stabilität und Betriebssicherheit des Schwenkfußes.

Diese Aufgabe wird durch einen Schwenkfuß mit den Merkmalen des Anspruchs 1 gelöst.

Bei dem erfindungsgemäßen Schwenkfuß ist der Abrollsteg als integraler Bestandteil der Schwenkwange ausgebildet, so daß durch den Verzicht auf ein zusätzliches Verbindungsmaterial, wie es beispielsweise zur Herstellung einer Schweißverbindung notwendig ist, eine Gewichtsreduzierung des Schwenkfußes möglich ist.

Wenn darüber hinaus erfindungsgemäß der Abrollsteg des Schwenkfußes aus einem Umformrand eines ebenen Blechzuschnitts zur Herstellung der Schwenkwange gebildet ist, ist es möglich, die Schwenkeinheit des Schwenkfußes kostengünstig in einem Umformvorgang herzustellen, der nicht nur eine einstückige Ausbildung der Schwenkeinheit aus Schwenkwange und Abrollsteg ermöglicht, sondern darüber hinaus die Herstellung einer derartigen Schwenkeinheit mit einem besonders einfachen Herstellungsverfahren, wie beispielsweise ein Biegestanzen, ermöglicht, bei dem die Herstellung des Blechzuschnitts und die Verformung bzw. Umformung des Blechzuschnitts zur Herstellung der Schwenkeinheit in einem Arbeitsgang erfolgt.

Wenn darüber hinaus die Schwenkwange mit Versteifungssicken versehen ist, so daß der Biegesteifigkeit des verwendeten Materials noch eine Formsteifigkeit überlagert werden kann, läßt sich ein relativ dünnwandiges Blech zur Herstellung der Schwenkeinheit verwenden, was zu einer weiteren Gewichtsreduzierung führt.

Eine besonders hohe Wirksamkeit der Versteifungssicken im Hinblick auf eine optimale Überlagerung der Formsteifigkeit mit der Biegesteifigkeit des verwendeten Materials läßt sich erzielen, wenn die Versteifungssikken sich radial von einer Schwenkachse des Schwenkfußes wegerstrecken.

Zur Erzielung einer erhöhten Seitenstabilität kann die Schwenkeinheit zwei parallel angeordnete Schwenkwangen aufweisen, die durch mindestens einen Verbindungsstab miteinander verbunden sind.

Als besonders vorteilhaft erweist es sich, wenn die Schwenkwangen zur Verbindung mit dem mindestens einen Verbindungsstab als Stanzlöcher ausgebildete Einstecklöcher aufweisen, so daß auch die Einstecklöcher zusammen mit dem Ausstanzen des Blechzuschnitts und der Umformung bzw. Umbiegung des Blechzuschnitts zur Ausbildung des Abrollstegs in ein und demselben Biege-/ Stanzvorgang herstellbar sind.

Wenn ein Verbindungsstab zur Ausbildung der Schwenkachse als Steckachse ausgeführt ist, wird insgesamt ein besonders einfacher Aufbau der Schwenkeinheit ermöglicht.

Nachfolgend wird eine bevorzugte Ausführungsform des Schwenkfußes anhand der Zeichnungen näher erläutert. Es zeigen:
- **Fig. 1**: einen über eine Schwenkachse an einem Stützrohr einer Hubeinrichtung angelenkten Schwenkfuß;
- **Fig. 2**: eine Schwenkeinheit des in **Fig. 1** dargestellten Schwenkfußes in Seitenansicht;
- **Fig. 3**: die in **Fig. 2** dargestellte Schwenkeinheit in Schnittdarstellung gemäß Schnittlinienverlauf II-II.

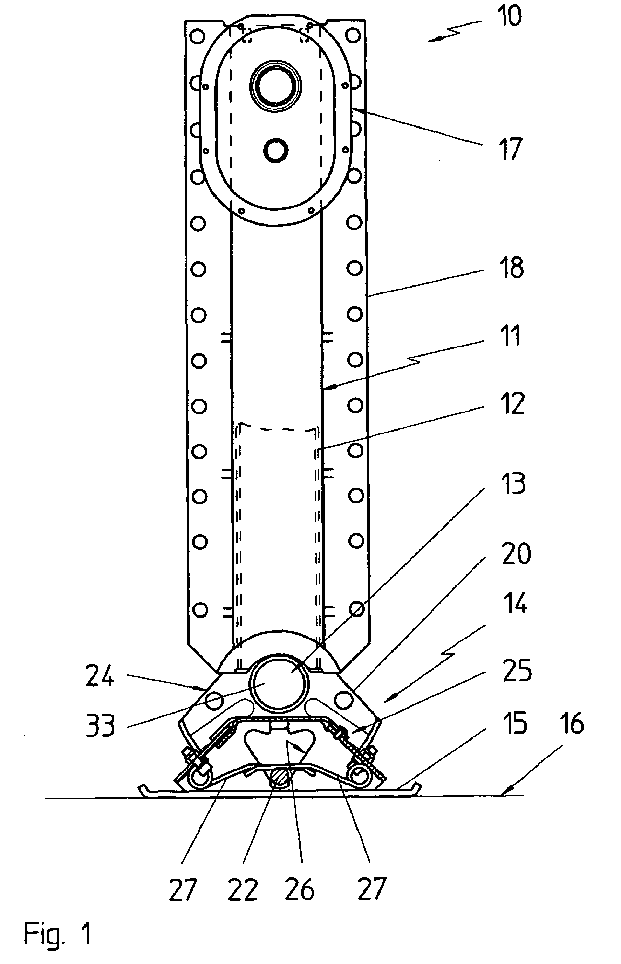

**Fig. 1** zeigt eine Hubstütze 10 mit einem Schaftrohr 11, das gegenüber einem im Innern des Schaftrohrs 11 aufgenommenen Stützrohr 12 verfahrbar ist. Das Stützrohr 12 stützt sich an seinem unteren Ende auf einem Schwenklager 13 eines Schwenkfußes 14 ab, der mit einer Fußplatte 15 auf einem Untergrund 16 steht.

Am Schaftrohr 11 ist ein Hubgetriebe 17 angeordnet, das mit einer hier nicht näher dargestellten und im Innern des Stützrohrs 12 angeordnete Hubspindel zusammenwirkt, die ein Verfahren des Schaftrohrs 11 gegenüber dem Stützrohr 12 ermöglicht. Das Schaftrohr 11 weist rückwärtig eine Montageplatte 18 auf, die zum mechanischen Anschluß des Schaftrohrs 11 an einem mittels der Hubstütze 10 anzuhebenden Gegenstand, also beispielsweise einem Fahrzeugchassis eines Sattelaufliegers, dient, um die vom Schaftrohr 11 gegenüber dem Stützrohr 12 ausgeführte Hubbewegung auf das Fahrzeugchassis zu übertragen.

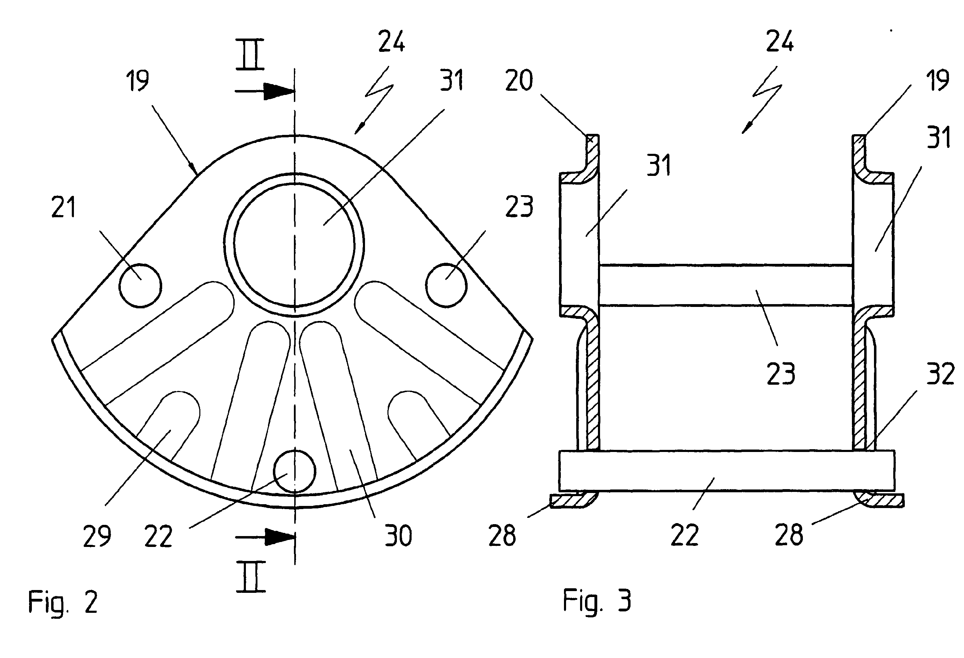

Der Schwenkfuß 14 weist zwei in den **Fig. 2** und **3** näher dargestellte Schwenkwangen 19, 20 auf, die über drei Verbindungsstäbe 21, 22, 23 miteinander verbunden eine Schwenkeinheit 24 bilden. Wie **Fig. 1** zeigt, ist zwischen den Schwenkwangen 19, 20 auf der Fußplatte 15 ein Federkäfig 25 angeordnet, in dem ein Verbindungsstab 22 der Schwenkeinheit 24 innerhalb einer Kulisse 26 durch vorgespannte Schenkelfedern belastet geführt wird. Bei einer Relativbewegung der Schwenkeinheit 24 gegenüber der Fußplatte 15 wälzen die Schwenkwangen 19, 20 mit ihren Abrollstegen 28 auf der Fußplatte 15 ab.

Wie in den **Fig. 2** und **3** dargestellt, sind die Schwenkwangen 19, 20 aus relativ dünnwandigen Blechzuschnitten hergestellt, die ihre insbesondere in der **Fig. 3** ersichtliche Profilierung durch einen Umformvorgang erhalten, wie beispielsweise Biegestanzen, Drücken, Prägen oder dergleichen. Aufgrund der relativ dünnwandigen Ausbildung der Blechzuschnitte können diese in einem Stanzvorgang sehr kostengünstig hergestellt werden. Um trotz der dünnwandigen Ausbildung Schwenkwangen mit der aufgrund der Hubstützenbelastung notwendigen Steifigkeit zu erhalten, sind die Schwenkwangen 19, 20 mit Sicken 29, 30 versehen, die sich hier vorzugsweise strahlenförmig von Aufnahmlöchern 31 zur Aufnahme einer Steckachse 33 wegerstrecken.

Die in den **Fig. 2** und **3** dargestellten Schwenkwangen 19, 20 können nach dem Ausstanzen des in etwa kreissegmentförmigen Blechzuschnitts in einem einzigen Umformvorgang hergestellt werden, wobei gleichzeitig die Aufnahmelöcher 31 und die Abrollstege 28 durch Einstechen bzw. Umbiegen hergestellt werden.

Die am Beispiel der **Fig. 2** und **3** dargestellte neuartige Gestaltung der Schwenkwangen als Prägeteile ermöglicht im Vergleich zu den bekannten Schwenkwangen bzw. den bekannten Schwenkeinheiten eine wesentlich einfachere und kostengünstigere Herstellung. Zum einen kann von vornherein ein dünnwandigeres Blechmaterial verwendet werden, zum anderen entfällt auch das bislang übliche Ausbilden der Abrollstege durch Anschweißen von streifenförmigen Blechzuschnitten an separate Wangenteile. Um aus den vorstehend beschriebenen Schwenkwangen 19, 20 eine Schwenkeinheit 24 zu bilden, werden lediglich die Verbindungsstäbe 21, 22 und 23 an ihren Enden mit den Schwenkwangen 19, 20 verschweißt. Hierzu können positionierende Einstecklöcher 32 in den Schwenkwangen 19, 20 vorgesehen sein, die wie die Aufnahmelöcher 31 durch Ausstanzungen in den Schwenkwangen 19, 20 bzw. in den zur Herstellung der Schwenkwangen 19, 20 dienenden Blechzuschnitten herstellbar sind.

## Patentansprüche

1. Schwenkfuß zur Abstützung einer Stütz- oder Hubeinrichtung, insbesondere eine Sattelstütze oder dergleichen, mit einem Stützrohr zur verschwenkbaren Abstützung auf einer Schwenkachse des Schwenkfußes, wobei der Schwenkfuß eine Schwenkeinheit mit zumindest einer Schwenkwange aufweist, die bei einer Verlagerung der Schwenkachse mit einem Abrollsteg eine Abrollbewegung ausführt,
**dadurch gekennzeichnet,**
**dass** der Abrollsteg (28) als integraler Bestandteil der Schwenkwange (19, 20) ausgebildet ist, wobei der Abrollsteg (28) aus einem Umformrand eines ebenen Blechzuschnitts zur Herstellung der Schwenkwange (19, 20) gebildet ist.

2. Schwenkfuß nach Anspruch 1,
**dadurch gekennzeichnet,**
**dass** die Schwenkwange (19, 20) mit Versteifungssicken (29, 30) versehen ist.

3. Schwenkfuß nach Anspruch 2,
**dadurch gekennzeichnet,**
**dass** sich die Versteifungssicken (29, 30) radial von einer Schwenkachse (33) wegerstrecken.

4. Schwenkfuß nach einem der vorangehenden Ansprüche,
**dadurch gekennzeichnet,**
**dass** zwei parallel angeordnete Schwenkwangen (19, 20) verbunden durch mindestens einen Verbindungsstab (21, 22, 23) eine Schwenkeinheit (24) bilden.

5. Schwenkfuß nach Anspruch 4,
**dadurch gekennzeichnet,**
**dass** die Schwenkwangen (19, 20) zur Verbindung mit mindestens einem Verbindungsstab (21, 22, 23) als Stanzlöcher ausgebildete Einstecklöcher (32) aufweisen.

6. Schwenkfuß nach Anspruch 4 oder 5,
**dadurch gekennzeichnet,**
**dass** ein Verbindungsstab als Steckachse (33) zur Ausbildung der Schwenkachse ausgeführt ist.

## Claims

1. Swivel foot for the support of a supporting or lifting device, in particular a trailer support or the like, with a support tube for the pivotable support of the swivel foot on a swivel axis, the swivel foot comprising a swivel unit with at least one swivel cheek , which executes a rolling movement with a roller web when the swivel axis is displaced, **characterised in that** the roller web (28) is configured as an integral component of the swivel cheek (19, 20), the roller web (28) being formed from a formed edge of a flat sheet metal blank for producing the swivel cheek (19, 20).

2. Swivel foot according to claim 1, **characterised in that** the swivel cheek (19, 20) is provided with stiffener beads (29, 30).

3. Swivel foot according to claim 2, **characterised in that** the stiffener beads (29, 30) extend radially away from a swivel axis (33).

4. Swivel foot according to any one of the preceding claims, **characterised in that** two swivel cheeks (19, 20) arranged parallel to one another and connected by at least one connecting rod (21, 22, 23) form a swivel unit (24).

5. Swivel foot according to claim 4, **characterised in that** the swivel cheeks (19, 20) comprise insertion holes (32) configured as punched holes for connecting to at least one connecting rod (21, 22, 23).

6. Swivel foot according to claim 4 or 5, **characterised in that** a connecting rod is designed as a push-on shaft (33) to form the swivel axis.

## Revendications

1. Pied pivotant pour le support d'un dispositif de soutien ou d'élévation, en particulier béquille de remorque ou similaire, avec un tube support pour un appui pivotant autour d'un axe de pivotement du pied pivotant, ledit pied pivotant comportant une unité de pivotement avec au moins une joue de pivotement, exécutant lors d'un décalage de l'axe de pivotement, un mouvement de roulement, avec un bord de roulement,
**caractérisé en ce que** le bord de roulement (28) est formé comme composant intégré à la joue de pivotement (19, 20), ledit bord de roulement (28) étant constitué par un bord de formage d'une découpe de tôle plane pour la fabrication de la joue de pivotement (19, 20).

2. Pied pivotant selon la revendication 1,
**caractérisé en ce que** la joue de pivotement (19, 20) est pourvue de deux moulures de renforcement (29, 30).

3. Pied pivotant selon la revendication 2,
**caractérisé en ce que** les moulures de renforcement (29, 30) s'étendent radialement depuis un axe de pivotement (33).

4. Pied pivotant selon l'une des revendications précédentes,
**caractérisé en ce que** deux joues de pivotement (19, 20) parallèles entre elles raccordées par au moins une barre de liaison (21, 22, 23) forment une unité de pivotement (24).

5. Pied pivotant selon la revendication 4,
**caractérisé en ce que** les joues de pivotement (19, 20) comportent des trous d'engagement (32) formés comme trous de poinçonnage pour le raccordement par au moins une barre de liaison (21, 22, 23).

6. Pied pivotant selon la revendication 4 ou 5,
**caractérisé en ce qu'**une barre de liaison est exécutée comme axe d'engagement (33) pour la formation de l'axe de pivotement.
